# EUROPÄISCHE PATENTSCHRIFT

(11) **EP 3 124 242 B1**
(45) Veröffentlichungstag und Bekanntmachung des Hinweises auf die Patenterteilung: **19.09.2018**
(21) Anmeldenummer: 16001484.1
(22) Anmeldetag: 05.07.2016
(51) Int. Cl.: B32B 37/15, B32B 37/12

(54) **VERFAHREN UND VORRICHTUNG ZUR HERSTELLUNG EINER WASSERDAMPFDURCHLÄSSIGEN FLÄCHIGEN BAHN**
METHOD AND DEVICE FOR PRODUCING A WATER VAPOUR PERMEABLE WEB
PROCEDE ET DISPOSITIF DE FABRICATION D'UNE BANDE PERMEABLE A LA VAPEUR D'EAU

(30) Priorität: 28.07.2015 DE 102015009553; 25.02.2016 DE 102016002152
(43) Veröffentlichungstag der Anmeldung: 01.02.2017
(73) Patentinhaber: SML Maschinengesellschaft m.b.H., 4860 Lenzing (AT)
(72) Erfinder: Höllnsteiner, Mario, A-4863 Seewalchen (AT); Danter, Johannes, A-4880 Sankt Georgen im Attergau (AT)
(74) Vertreter: Gosdin, Michael

(56) Entgegenhaltungen:
- WO-A1-2005/021262
- WO-A1-2005/058599
- WO-A1-2007/133128
- DE-U1-202016 001 759

## Beschreibung

Die Erfindung betrifft ein Verfahren und eine Vorrichtung zur Herstellung einer wasserdampfdurchlässigen flächigen Bahn. Das Verfahren weist die Schritte auf:
a) Zuführen einer flächigen Trägerbahn zu einer ersten Walze und Aufbringen eines Klebstoffs auf eine Seite der Trägerbahn an einer ersten Stelle in Förderrichtung der Trägerbahn, wobei der Klebstoff ein Schmelzklebstoff ist und in schmelzflüssigem Zustand auf die Trägerbahn aufgebracht wird;
b) Aufbringen eines wasserdampfdurchlässigen aufgeschmolzenen Materials auf die mit dem Klebstoff versehene Seite der Trägerbahn an einer zweiten Stelle in Förderrichtung der Trägerbahn, die der ersten Stelle nachgelagert ist;
c) Pressen des Verbunds aus Trägerbahn, Klebstoff und wasserdampfdurchlässigem Material in einem Walzspalt, der durch die erste Walze und einer mit der ersten Walze zusammenwirkenden zweiten Walze gebildet wird;
d) Kühlen des gepressten Verbunds aus Trägerbahn, Klebstoff und wasserdampfdurchlässigem Material in Förderrichtung hinter dem Walzspalt und Ausfördern des Verbunds aus der Walzenanordnung.

Für verschiedene Anwendungen werden flächige Bahnen benötigt, die eine Durchlässigkeit bezüglich Wasserdampfs aufweisen. Bislang werden derartige Bahnen in mehreren Produktionsschritten hergestellt: Zunächst erfolgt die Herstellung der Funktionsschicht, d. h. eines atmungsaktiven Films, auf einer Castfilm- oder Blasfilmanlage. Anschließend erfolgt ein Laminieren einer Trägerschicht (z. B. Vliesstoff oder Folie) und der Funktionsschicht mittels Kleberlaminierung.

Ein gattungsgemäßes Verfahren offenbart die WO 2005/058599 A1**.** Ein ähnliches Verfahren ist in der DE 197 25 451 A1 beschrieben. Hier wird auf einer Trägerschicht eine wasserdampfdurchlässige Schicht aufgetragen, wobei es optional auch möglich ist, dass die Trägerschicht auf der der wasserdampfdurchlässigen Schicht zugewandten Seite mit einem Klebstoff versehen werden kann. Weitere Lösungen zeigen die WO 2005/021262 A1 und die WO 2007/133128 A1**.**

Wird hierbei ohne Klebstoff gearbeitet, erfolgt das Laminieren des Verbunds zwischen gekühlten Walzen, nachdem die extrudierte wasserdampfdurchlässige Schicht auf der Trägerschicht abgelegt wurde.

Im Falle der Verwendung eines Schmelzklebers (Hotmelts) wird dieser vor der Laminierung des Verbunds auf die Trägerschicht aufgesprüht oder aufgestreut. Das Laminieren erfolgt in diesem Falle zwischen Heizwalzen, die auf eine Temperatur oberhalb des Schmelzpunkts des Schmelzklebers aufgeheizt sind. Demgemäß wird in diesem Falle zuerst die wasserdampfdurchlässige Schicht extrudiert und abgekühlt, bevor sie dann anschließend mit der Trägerschicht in einem Heizwalzwerk laminiert wird, welche auf der dem wasserdampfdurchlässigen Film zugewandten Seite mit Schmelzkleber vorbereitet ist. Der hierfür verwendete Kleber wird in kaltem Zustand aufgetragen. Im Heizwalzwerk und somit in einem separaten, zweiten Walzspalt erfolgen das Aufschmelzen des Schmelzklebers und die Fertigstellung des Verbunds.

Demzufolge muss bei dem vorbekannten Verfahren die gewünschte Bahn als Laminat in zwei einzelnen Produktionsprozessen hergestellt werden.

Bei der Herstellung des atmungsaktiven Films hat dieser - bedingt durch den Cast- bzw. Blasfilmprozess - eine gewisse Mindestdicke, da er ansonsten ohne entsprechende Unterstützung durch Ablage auf dem Trägermaterial nicht gewickelt bzw. durch die Anlage geführt werden kann. Beim späteren Laminieren mit dem Trägermaterial wird dieser Film auf einer Laminieranlage wieder abgerollt und verarbeitet (laminiert). Somit werden also die in Rede stehenden Produkte bislang so hergestellt, dass eine Warenbahn mit einem fertigen Film mit Hilfe von Kleberkaschierung laminiert wird.

Durch diesen zweistufigen Prozess fallen zusätzliche Produktionsschritte und folglich entsprechende Kosten an. Nachteilig ist weiterhin, dass es nicht möglich ist, eine sehr dünne atmungsaktive Funktionsschicht herzustellen, da diese bei dem vorbekannten Verfahren eine gewisse Mindestdicke zur Handhabung aufweisen muss. Die Dicke der Funktionsschicht ist ausschlaggebend für die Atmungsaktivität des Gesamtverbundes, d. h. je dünner die Schicht ist, desto höher ist auch die Atmungsaktivität.

Der Erfindung liegt die Aufgabe zugrunde, ein Verfahren der eingangs genannten Art sowie eine entsprechende Vorrichtung zu schaffen, mit dem bzw. mit der es möglich ist, die oben genannten Nachteile zu vermeiden. Demgemäß soll in wirtschaftlicher Weise eine wasserdampfdurchlässige Bahn geschaffen werden, die sich durch eine dünne Schicht des wasserdampfdurchlässigen Materials kennzeichnet. Weiterhin soll eine verbesserte Verbindung zwischen Trägerbahn und wasserdampfdurchlässigem Material hergestellt werden. Dabei soll das Verfahren in effizienter Weise die Herstellung der Bahn erlauben.

Die Lösung dieser Aufgabe durch die Erfindung ist dadurch gekennzeichnet, dass der Schmelzklebstoff mittels einer Breitschlitzdüse auf die Trägerbahn aufgebracht wird.

Eine vorteilhafte Ausgestaltung dieses Verfahrens sieht vor, dass zwischen den Klebstoff und das wasserdampfdurchlässige Material ein weiteres flächig ausgebildetes Material in Form eines offenen Gitters eingebracht wird. Durch ein solches offenes Gitter können die Festigkeitseigenschaften des zu erzeugenden Laminats verbessert werden.

Das wasserdampfdurchlässige Material wird vorzugsweise mittels eines Extrusionsvorgangs aufgeschmolzen.

Bei dem wasserdampfdurchlässigen Material handelt es sich beispielsweise und bevorzugt um Thermoplastisches Elastomer (TPE), Thermoplastisches Copolyester (TPC), Thermoplastisches Urethan (TPU) oder um Thermoplastische Copolyamide (TPA).

Als Trägerbahn kann eine Folie, ein textiles Gewebe oder ein Vliesstoff eingesetzt werden.

Das wasserdampfdurchlässige Material wird bevorzugt mittels einer Flachdüse auf die Trägerbahn aufgebracht.

Der Klebstoff wird dabei vorzugsweise so auf die Trägerbahn aufgebracht, dass eine offenporige Klebstoff-Schicht ohne vollständig durchgehende flächige Beschichtung auf der Trägerbahn vorliegt.

Das Kühlen gemäß obigem Schritt d) erfolgt dabei bevorzugt, indem die zweite Walze gekühlt wird.

Die Vorrichtung zur Durchführung des Verfahrens weist auf:
- eine erste Walze, wobei an einer ersten Umfangsstelle der ersten Walze oder in Förderrichtung (kurz) vor der ersten Kontaktstelle zwischen erster Walze und Trägerbahn eine Düse zur Aufbringung aufgeschmolzenen Klebstoffs in Form eines Schmelzklebstoff in schmelzflüssigem Zustand angeordnet ist,
- eine zweite Walze, die unter Bildung eines Walzspalts mit der ersten Walze zusammenwirkt,
- eine Flachdüse zur Aufbringung wasserdampfdurchlässigen Materials, die im Bereich des Walzspalts angeordnet ist,
wobei erfindungsgemäß vorgesehen ist, dass die Düse als Breitschlitzdüse ausgebildet ist.

Dabei ist bevorzugt vorgesehen, dass die erste Umfangsstelle der ersten Walze und der Walzspalt um einen Umfangswinkel von mindestens 120°, vorzugsweise von 180°, voneinander entfernt sind.

Ferner kann ein Kleberauftragssystem zum Auftragen einer Kleberschicht auf die Trägerbahn vorgesehen werden.

Erfindungsgemäß ist also vorgesehen, dass die bisher im Stand der Technik getrennten beiden verschiedenen Verfahrensschritte bzw. Auftragsverfahren in einem Prozess kombiniert werden.

Hierdurch kann kostengünstig ein laminiertes atmungsaktives, d. h. wasserdampfdurchlässiges bahnförmiges Produkt hergestellt werden.

Vorteilhaft ist weiterhin, dass durch die Verwendung eines Klebers Materialien miteinander verbunden werden können, die ansonsten keine oder nur eine schlechte Haftung zueinander aufweisen.

Das Trägermaterial bevorzugt in Form einer Folie, eines textilen Gewebes oder eines Vliesstoffs (non-woven material) wird mit Hilfe eines Schmelzklebers mit einer extrudierten Schmelzeschicht verbunden.

Das vorgeschlagene Verfahren arbeitet also zweistufig. Die Bahn aus Trägermaterial wird hierbei vorzugsweise über eine Breitschlitzdüse mit einem "aufgerissenen" Heißschmelzkleber beschichtet und anschließend im nachfolgenden Beschichtungsspalt mit einem vorzugsweise über eine Flachdüse extrudierten atmungsaktiven Schmelzefilm beschichtet. Der atmungsaktive Schmelzefilm ist beim Auftreffen auf der mit Heißschmelzkleber vorbeschichteten (vorgestrichenen) Warenbahn vorzugsweise noch nicht abgekühlt.

Durch die kombinierte Fahrweise lässt sich der atmungsaktive Schmelzefilm dünner herstellen, da er gleich auf die Warenbahn aufgetragen wird und somit keine Beschränkung bezüglich der Bahnführung besteht. Dadurch, dass der Schmelzefilm beim Auftrag noch nicht abgekühlt ist, sondern im aufgeschmolzenen Zustand vorliegt, haftet er besser an der zu beschichtenden Trägerbahn.

Ferner ergibt sich vorteilhaft, dass sich durch die direkte Beschichtung mit Schmelzefilm eine dünnere Funktionsschicht herstellen lässt.

Durch die Kombination der beiden Prozesse können die Produktionskosten reduziert werden.

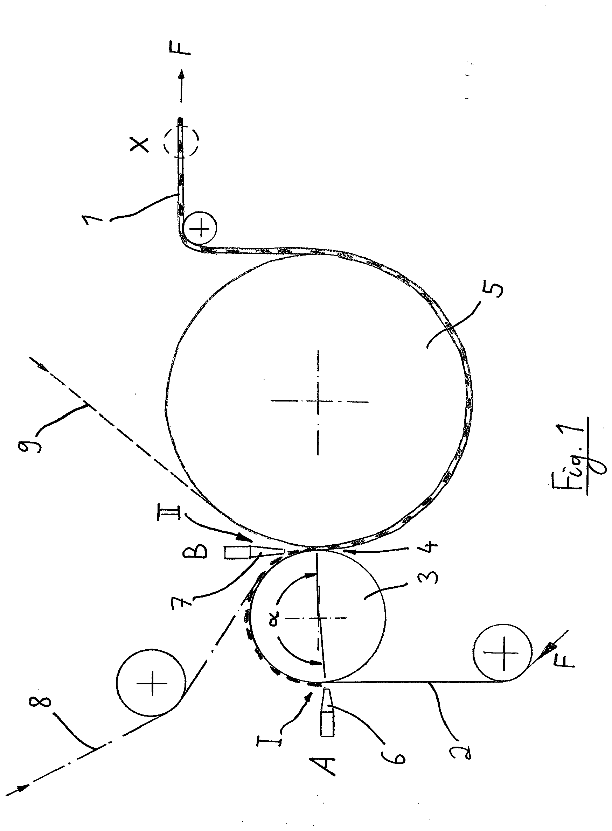

Insgesamt kann insoweit gesagt werden, dass nach der Erfindung also vorgesehen ist, dass der Prozess der Herstellung des Gesamtverbundes zwischen Trägerbahn, wasserdampfdurchlässigem Material und Heißkleber in einem einzigen Prozessschritt bzw. einem einzigen Walzspalt erfolgt. Diesbezüglich wird auf Figur 1 (s. unten) Bezug genommen.

Durch die vorgeschlagene Vorgehensweise ergeben sich wesentliche prozesstechnische Vorteile: Da der Heißkleber in schmelzflüssigem Zustand auf die Trägerbahn aufgebracht wird - und zwar kurz bevor das wasserdampfdurchlässige Material auf diese aufgebracht wird -, hat der Schmelzkleber eine verbesserte Reaktionsfähigkeit. Der Verbund zwischen den einzelnen Bestandteilen der sich ergebenden Bahn ist somit verbessert.

Durch das Aufbringen des Schmelzklebers in schmelzflüssigem Zustand kann zudem eine geringere Dicke der wasserdampfdurchlässigen Schicht erreicht werden. Werte von unter 12 µm Schichtdicke dieses Materials sind mit vorbekannten Lösungen nicht zu erreichen; bei Einsatz der erfindungsgemäßen Lösung lässt sich dieser Wert etwa halbieren. Demgemäß hat die wasserdampfdurchlässige Schicht bevorzugt eine Schichtdicke von weniger als 10 µm, vorzugsweise von weniger als 8 µm.

Wesentlich ist weiterhin, dass der gesamte Prozess in einem einzigen Walzspalt durchgeführt werden kann, so dass nicht nur der vorrichtungstechnische Aufwand geringer ist, sondern auch ein verbesserter Verbund der sich ergebenden Bahn vorliegt.

Mit dem beschriebenen Verfahren bzw. der entsprechenden Vorrichtung lassen sich verschiedenartige Produkte herstellen, die sich für spezielle Anwendungsfälle als besonders vorteilhaft erwiesen haben. Einige Beispiele hierfür sind nachfolgend angegeben.

In der Zeichnung sind Ausführungsbeispiele der Erfindung dargestellt. Es zeigen:
- Fig. 1: in der Seitenansicht eine Vorrichtung zur Herstellung einer wasserdampfdurchlässigen flächigen Bahn.
- Fig. 2: die Einzelheit "X" gemäß Fig. 1 und
- Fig. 3: die Einzelheit "X" gemäß Fig. 1 in einer alternativen Ausgestaltung.

In den Figuren ist eine wasserdampfdurchlässige flächige Bahn 1 zu sehen, die mit der in Figur 1 dargestellten Vorrichtung gefertigt wird. Die Bahn 1 besteht aus einer flächigen Trägerbahn 2, die eine Folie sein kann oder aus einem Vliesstoff besteht. Die Trägerbahn 2 wird in eine Fördererrichtung F einer ersten Walze 3 zugeführt. Die Trägerbahn 2 wird um einen Umfangswinkel von ca. 180° um die erste Walze 3 herumgeführt, bevor sie in einen Walzspalt 4 gerät, der von der ersten Walze 3 und einer zweiten Walze 5 gebildet wird.

Im dargestellten Ausführungsbeispiel nach Figur 1 ist noch zu sehen, dass - was allerdings nur eine Option darstellt und nicht zwingend ist - ein offenes Gitter 8 in den Bereich des Walzspalts 4 geführt wird, dass in den entstehenden laminierten Verbund eingebunden wird.

Sobald die Trägerbahn 2 die erste Walze 3 erreicht hat (es ist allerdings auch möglich, dass dies in Fördererrichtung F gesehen bereits vorher erfolgt), wird an einer ersten Stelle I auf die Trägerbahn 2 mittels einer Breitschlitzdüse 6 ein aufgeschmolzener Klebstoff A (Hotmelt-Klebstoff) aufgebracht. Allerdings erfolgt diese Aufbringung nicht flächendeckend; vielmehr lässt der Klebstoff A einen Teil der Oberfläche der Trägerbahn 2 unbedeckt, was in den Figuren angedeutet ist.

Im Bereich des Walzspalts 4 ist eine Flachdüse 7 angeordnet, über die ein wasserdampfdurchlässiges Material B in schmelzflüssigem Zustand auf die Trägerbahn 2 aufgebracht wird, und zwar auf der Seite, auf der auch der Klebstoff A aufgebracht wurde. Die Flachdüse 7 ist dabei an einer zweiten Stelle II angeordnet, die von der ersten Stelle I entlang des Umfangswinkels α von ca. 180° entfernt ist.

Die Trägerbahn (Warenbahn) 2 wird also gemäß einer bevorzugten Ausgestaltung der Erfindung mit Hilfe der im Einlauf des Laminators (Walzenstuhl mit Kühlwalze 5 und gummierter Anpresswalze 3) befindlichen Breitschlitzdüse 6 mit der Kleberschicht A beschichtet. Diese Kleberschicht A bedeckt die Trägerbahn 2 nicht vollflächig, sondern bildet eine offenporige Beschichtung.

Anschließend wird ein extrudierter Schmelzefilm über die Flachdüse 7 aufgetragen und im Walzspalt (Laminierspalt) 4 zwischen Kühlwalze 5 und gummierter Anpresswalze 3 verpresst. Beim extrudierten Material handelt es sich um eine atmungsaktive Type, welche ein Durchdiffundieren von Wasserdampf ermöglicht.

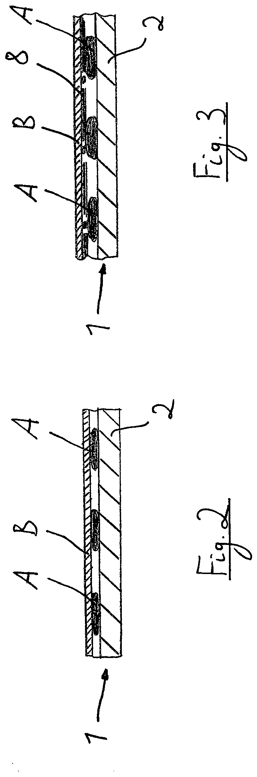

In Figur 2 ist das fertige Laminat zu sehen, das hier aus der flächigen Trägerbahn 2, dem Klebstoff A und dem wasserdampfdurchlässigen Material B besteht.

Im Unterschied dazu zeigt Figur 3 den Verbund, der hier noch des weiteren das offene Gitter 8 umfasst, das zwischen dem Klebstoff A und dem wasserdampfdurchlässigen Material B angeordnet ist. Durch das Gitter 8 ist die mechanische Stabilität des Laminats verbessert.

In der nachfolgenden Tabelle ist in Form einer Matrix angegeben, wie für verschiedene Produkte (Produkte Nr. 1 bis 21 von oben nach unten) die Verfahrensabfolge (von links nach rechts) und die zum Einsatz kommenden Materialien ausgestaltet sein können.

**Produktgruppe 1**

| | | | | | | |
|---|---|---|---|---|---|---|
| Produkt 1 | **Nonwoven** | Hotmelt | *TPE extrudiert* | **Nonwoven** | | |
| Produkt 2 | **Nonwoven** | Hotmelt | *TPE extrudiert* | Hotmelt | **Nonwoven** | |
| Produkt 3 | **Nonwoven** | **Verstärkungsgitter** | Hotmelt | *TPE extrudiert* | **Nonwoven** | |
| Produkt 4 | **Nonwoven** | **Verstärkungsgitter** | Hotmelt | *TPE extrudiert* | Hotmelt | **Nonwoven** |
| | | | | | | |
| Produkt 5 | **Nonwoven** | Hotmelt | *TPU extrudiert* | **Nonwoven** | | |
| Produkt 6 | **Nonwoven** | Hotmelt | *TPU extrudiert* | Hotmelt | **Nonwoven** | |
| Produkt 7 | **Nonwoven** | **Verstärkungsgitter** | Hotmelt | *TPU extrudiert* | **Nonwoven** | |
| Produkt 8 | **Nonwoven** | **Verstärkungsgitter** | Hotmelt | *TPU extrudiert* | Hotmelt | **Nonwoven** |
| | | | | | | |
| Produkt 9 | **Nonwoven** | Hotmelt | *TPE extrudiert* | *TPU extrudiert* | | |
| | | | | | | |
| Produkt 10 | **Filz** | Hotmelt | *TPE extrudiert* | *TPU extrudiert* | | |
| Produkt 11 | **Filz** | Hotmelt | *TPU extrudiert* | | | |

**Produktgruppe 2**

| | | | | | |
|---|---|---|---|---|---|
| Produkt 12 | **Nonwoven** | Hotmelt | *TPE extrudiert* | | |
| Produkt 13 | **Nonwoven** | Hotmelt | *TPE extrudiert* | **Nonwoven** | |
| Produkt 14 | **Nonwoven** | Hotmelt | *TPE extrudiert* | Hotmelt | **Nonwoven** |
| | | | | | |
| Produkt 15 | **Nonwoven** | Hotmelt | *TPU extrudiert* | | |
| Produkt 16 | **Nonwoven** | Hotmelt | *TPU extrudiert* | **Nonwoven** | |
| Produkt 17 | **Nonwoven** | Hotmelt | *TPU extrudiert* | Hotmelt | **Nonwoven** |

**Produktgruppe 3**

| | | | |
|---|---|---|---|
| Produkt 18 | **Nonwoven** | Hotmelt | *TPE extrudiert* |
| Produkt 19 | **Nonwoven** | Hotmelt | *TPU extrudiert* |

**Produktgruppe 4**

| | | | | | |
|---|---|---|---|---|---|
| Produkt 20 | **Textilgewebe** | Hotmelt | *TPU extrudiert* | | |
| Produkt 21 | **Textilgewebe** | Hotmelt | *TPU extrudiert* | Hotmelt | **Textilgewebe** |

| | |
|---|---|
| **Fettdruck:** | Material kommend von Abrollung |
| Unterstrichen: | Material mit Düse 6 aufgetragen |
| *Kursiv:* | Material mit Extrusionsdüse 7 aufgetragen |

Dargestellt sind vier untereinander angeordnete Blöcke von Produktgruppen, nämlich die Produktgruppen 1, 2, 3 und 4.

Bei der Produktgruppe 1 kann es sich beispielsweise um Dachunterspannbahnen, bei der Produktgruppe 2 um Medizinanwendungen (insbesondere um Operationstücher, um Operationsabdeckungen und um Operationsunterlagen), bei der Produktgruppe 3 um Einwegkleidung, Windelfolien, sog. Backsheets und Hygienefolien und bei der Produktgruppe 4 um Funktionsbekleidung handeln.

Die Produktgruppe 1 umfasst die Produkte 1 bis 11, die Produktgruppe 2 die Produkte 12 bis 17, die Produktgruppe 3 die Produkte 18 und 19 und die Produktgruppe 4 die Produkte 20 und 21.

In der Tabelle sind für die einzelnen Produkte 1 bis 21 von links nach rechts die durchgeführten Verfahrensschritte illustriert, wobei mit Fettdruck das Material angegeben ist, das von einer Abrollung kommt und dem Prozess zugeführt wird. Mit unterstrichenem Druck ist das Material angegeben, das von einer "Hotmeltdüse" aufgetragen wird, d. h. im Sinne der obigen Darstellung durch die Breitschlitzdüse 6. Mit kursivem Druck ist das Material angegeben, das mit einer Extrusionsdüse aufgetragen wird, d. h. im Sinne der obigen Darstellung durch die Flachdüse 7.

Bei dem als "Nonwoven" bezeichneten Material handelt es sich insbesondere um einen Vliesstoff bzw. um Faservlies, das dem Prozess als Bahn zugeführt wird. Wie die Darstellung gemäß der Tabelle zeigt, kann auch ein Filz hierbei zur Anwendung kommen; gleichermaßen ist ein Textilgewebe möglich.

Auf besagte Bahn wird in der Mehrzahl der dargestellten Beispielsfälle dann Klebstoff bzw. Heißklebstoff ("Hotmelt") per Düse 6 aufgebracht. In einigen Fällen kann vorher auch ein Verstärkungsgitter 8 aufgebracht werden, wie es oben beschrieben ist.

Anschließend erfolgt der Auftrag von Material durch die Düse 7 per Extrusion. Wie aus den verschiedenen Möglichkeiten gemäß der Tabelle ersichtlich ist, kann dabei insbesondere thermoplastisches Elastomer (TPE) oder thermoplastisches Polyurethan (TPU) vorgesehen werden, das mit besagtem Prozess aufgebracht wird; auch die Kombination beider Verfahrensschritte (die auf einander folgen) ist möglich, siehe Produkte 9 und 10.

Im Anschluss daran sind weitere Verfahrensschritte möglich, gemäß denen nochmals Heißklebstoff ("Hotmelt") aufgebracht wird sowie - sich daran anschließend - dann eine weitere Materialbahn ("Nonwoven" oder Textilgewebe) zugeführt und mit dem Bahnverbund verbunden wird. Hierzu wird auf Fig. 1 Bezug genommen, wo als eine mögliche beispielhafte Ausgestaltung zu erkennen ist, dass ein weiteres Substrat 9 dem Prozess an der gewünschten Stelle zugeführt wird, um den gewünschten Verbund von Bahnen zu erzeugen und somit die wasserdampfdurchlässige flächige Bahn 1 zu erhalten. Besagtes Substrat 9 wird also von einer zusätzlichen Abrollung aus dem Prozessbereich zugeführt.

Das "Nonwoven"-Material hat dabei zumeist ein Gewicht von 30 bis 140 g/m²; dasselbe gilt für den Filz. Das Textilgewebe hat zumeist ein Gewicht von 10 bis 60 g/m².

Der Heißklebstoff wird mit einem Gewicht von ca. 1 bis 10 g/m² aufgetragen (bei der Produktgruppe 3 und 4 ist es zumeist etwas weniger: 1 bis 6 g/m²). Das Verstärkungsgitter hat zumeist ein Gewicht von 5 bis 35 g/m².

Das aufextrudierte Material wird im Falle von TPE zumeist mit einem Gewicht von 10 bis 40 g/m² aufgebracht, im Falle von TPU zumeist mit einem Gewicht von 10 bis 80 g/m². Bei der oben genannten Produktgruppe 2, 3 und 4 können es 6 bis 40 g/m² bei TPE und TPU sein.

Die erläuterten obigen Anwendungsbeispiele und Schichtaufbauten sind nur exemplarisch zu verstehen. Es sind die verschiedensten Kombinationen von Trägermaterialien, Klebstoff und wasserdampfdurchlässigen Material möglich. Der Fachmann wird dabei im jeweiligen Anwendungsfall die beste Kombination der genannten Elemente bzw. Komponenten festlegen.

### Bezugszeichenliste:

- 1: wasserdampfdurchlässige flächige Bahn
- 2: flächige Trägerbahn
- 3: erste Walze (gummierte Anpresswalze)
- 4: Walzspalt
- 5: zweite Walze (Kühlwalze)
- 6: Breitschlitzdüse
- 7: Flachdüse
- 8: offenes Gitter (Verstärkungsgitter)
- 9: zusätzliches Substrat

- A: Klebstoff
- B: wasserdampfdurchlässiges Material

- I: erste Stelle
- II: zweite Stelle

- F: Förderrichtung

- α: Umfangswinkel

## Patentansprüche

1. Verfahren zur Herstellung einer wasserdampfdurchlässigen flächigen Bahn (1), wobei das Verfahren die Schritte aufweist:
a) Zuführen einer flächigen Trägerbahn (2) zu einer ersten Walze (3) und Aufbringen eines Klebstoffs (A) auf eine Seite der Trägerbahn (2) an einer ersten Stelle (I) in Förderrichtung (F) der Trägerbahn (2), wobei der Klebstoff (A) ein Schmelzklebstoff ist und in schmelzflüssigem Zustand auf die Trägerbahn (2) aufgebracht wird;
b) Aufbringen eines wasserdampfdurchlässigen aufgeschmolzenen Materials (B) auf die mit dem Klebstoff (A) versehene Seite der Trägerbahn (2) an einer zweiten Stelle (II) in Förderrichtung (F) der Trägerbahn (2), die der ersten Stelle (I) nachgelagert ist;
c) Pressen des Verbunds aus Trägerbahn (2), Klebstoff (A) und wasserdampfdurchlässigem Material (B) in einem Walzspalt (4), der durch die erste Walze (3) und einer mit der ersten Walze (3) zusammenwirkenden zweiten Walze (5) gebildet wird;
d) Kühlen des gepressten Verbunds aus Trägerbahn (2), Klebstoff (A) und wasserdampfdurchlässigem Material (B) in Förderrichtung (F) hinter dem Walzspalt (4) und Ausfördern des Verbunds aus der Walzenanordnung (3, 5),
**dadurch gekennzeichnet, dass**
der Schmelzklebstoff (A) mittels einer Breitschlitzdüse (6) auf die Trägerbahn (2) aufgebracht wird.

2. Verfahren nach Anspruch 1, **dadurch gekennzeichnet, dass** zwischen den Klebstoff (A) und das wasserdampfdurchlässige Material (B) ein weiteres flächig ausgebildetes Material in Form eines offenen Gitters (8) eingebracht wird.

3. Verfahren nach Anspruch 1 oder 2, **dadurch gekennzeichnet, dass** das wasserdampfdurchlässige Material (B) mittels eines Extrusionsvorgangs aufgeschmolzen wird.

4. Verfahren nach einem der Ansprüche 1 bis 3, **dadurch gekennzeichnet, dass** als Trägerbahn (2) eine Folie, ein textiles Gewebe oder ein Vliesstoff eingesetzt wird.

5. Verfahren nach einem der Ansprüche 1 bis 4, **dadurch gekennzeichnet, dass** das wasserdampfdurchlässige Material (B) mittels einer Flachdüse (7) auf die Trägerbahn (2) aufgebracht wird.

6. Verfahren nach einem der Ansprüche 1 bis 5, **dadurch gekennzeichnet, dass** der Klebstoff (A) so auf die Trägerbahn (2) aufgebracht wird, dass eine offenporige Klebstoff-Schicht ohne vollständig durchgehende flächige Beschichtung auf der Trägerbahn (2) vorliegt.

7. Verfahren nach einem der Ansprüche 1 bis 6, **dadurch gekennzeichnet, dass** das Kühlen gemäß Schritt d) von Anspruch 1 erfolgt, indem die zweite Walze (5) gekühlt wird.

8. Vorrichtung zur Durchführung des Verfahrens nach einem der Ansprüche 1 bis 7, wobei die Vorrichtung aufweist:
- eine erste Walze (3), wobei an einer ersten Umfangsstelle der ersten Walze (3) oder in Förderrichtung (F) vor der ersten Kontaktstelle zwischen erster Walze (3) und Trägerbahn (2) eine Düse (6) zur Aufbringung aufgeschmolzenen Klebstoffs (A) in Form eines Schmelzklebstoff in schmelzflüssigem Zustand angeordnet ist,
- eine zweite Walze (5), die unter Bildung eines Walzspalts (4) mit der ersten Walze (3) zusammenwirkt,
- eine Flachdüse (7) zur Aufbringung wasserdampfdurchlässigen Materials (B), die im Bereich des Walzspalts (4) angeordnet ist,
**dadurch gekennzeichnet, dass**
die Düse (6) als Breitschlitzdüse ausgebildet ist.

9. Vorrichtung nach Anspruch 8, **dadurch gekennzeichnet, dass** die erste Umfangsstelle der ersten Walze (3) und der Walzspalt (4) um einen Umfangswinkel (α) von mindestens 120°, vorzugsweise von 180°, voneinander entfernt sind.

## Claims

1. Method for the production of a water vapour permeable laminar sheet (1), wherein the method comprises the steps of:
a) Feeding of a laminar carrier sheet (2) to a first roll (3) and application of an adhesive (A) onto one side of the carrier sheet (2) at a first location (I) in conveying direction (F) of the carrier sheet (2), wherein the adhesive (A) is a hot melt adhesive and is applied onto the carrier sheet (2) in a molten state;
b) Application of a water vapour permeable molten material (B) onto that side of the carrier sheet (2) which is provided with the adhesive (A) at a second location (II) in conveying direction (F) of the carrier sheet (2) which is located downstream from the first location (I);
c) Pressing of the composite of carrier sheet (2), adhesive (A) and water vapour permeable material (B) in a rolling gap (4) which is formed by the first roll (3) and a second roll (5) which cooperates with the first roll (3);
d) Cooling of the pressed composite of carrier sheet (2), adhesive (A) and water vapour permeable material (B) in conveying direction (F) downstream the rolling gap (4) and hauling of the composite from the roll arrangement (3, 5),
**characterized in that**
the adhesive (A) is applied by means of a sheet die (6) onto the carrier sheet (2).

2. Method according to claim 1, **characterized in that** a further laminar designed material in form of an open grid (8) is brought between the adhesive (A) and the water vapour permeable material (B).

3. Method according to claim 1 or 2, **characterized in that** the water vapour permeable material (B) is melted by means of an extrusion process.

4. Method according to one of claims 1 to 3, **characterized in that** as carrier sheet (2) a foil, a textile fabric or a non-woven fabric is employed.

5. Method according to one of claims 1 to 4, **characterized in that** the water vapour permeable material (B) is applied by means of a flat die (7) onto the carrier sheet (2).

6. Method according to one of claims 1 to 5, **characterized in that** the adhesive (A) is applied onto the carrier sheet (2) in such a manner that an open-cell layer of adhesive without a total continuous laminar coating is given on the carrier sheet (2).

7. Method according to one of claims 1 to 6, **characterized in that** the cooling according step d) of claim 1 takes place by cooling of the second roll (5).

8. Device for carrying out the method according to one of claim 1 to 7, wherein the device comprises:
- a first roll (3), wherein at a first peripheral location of the first roll (3) or in conveying direction (F) upstream of the first contact between the first roll (3) and carrier sheet (2) a nozzle (6) is arranged for the application of molten adhesive (A) in the form of a hotmelt adhesive in molten state,
- a second roll (5), which cooperates with the first roll (3) by forming of a rolling gap (4),
- a flat die (7) for the application of water vapour permeable material (B) which is arranged in the region of the rolling gap (4),
**characterized in that**
the nozzle (6) is designed as sheet die.

9. Device according to claim 8, **characterized in that** the first peripheral location of the first roll (3) and the rolling gap (4) are distanced from another by a peripheral angle (α) of at least 120°, preferably 180°.

## Revendications

1. Procédé de fabrication d'une bande plate perméable à la vapeur d'eau (1), dans lequel le procédé comprend les étapes suivantes:
a) amener une bande porteuse plate (2) à un premier rouleau (3) et déposer un adhésif (A) sur un côté de la bande porteuse (2) à un premier endroit (I) dans la direction de transport (F) de la bande porteuse (2), dans lequel l'adhésif (A) est une colle fusible et est déposé sur la bande porteuse (2) à l'état liquide fondu;
b) déposer un matériau fondu perméable à la vapeur d'eau (B) sur le côté de la bande porteuse (2) muni de l'adhésif (A) à un deuxième endroit (II) dans la direction de transport (F) de la bande porteuse (2), qui est situé après le premier endroit (I);
c) presser le composite composé de la bande porteuse (2), de l'adhésif (A) et du matériau perméable à la vapeur d'eau (B) dans une emprise de rouleaux (4), qui est formée par le premier rouleau (3) et un deuxième rouleau (5) coopérant avec le premier rouleau (3);
d) refroidir le composite pressé composé de la bande porteuse (2), de l'adhésif (A) et du matériau perméable à la vapeur d'eau (B) dans la direction de transport (F) après l'emprise de rouleaux (4) et faire sortir le composite du système de rouleaux (3, 5),
**caractérisé en ce que** l'on dépose la colle fusible (A) sur la bande porteuse (2) au moyen d'une buse à fente large (6).

2. Procédé selon la revendication 1, **caractérisé en ce que** l'on introduit un autre matériau plat sous la forme d'une grille ouverte (8) entre l'adhésif (A) et le matériau perméable à la vapeur d'eau (B).

3. Procédé selon la revendication 1 ou 2, **caractérisé en ce que** l'on fond le matériau perméable à la vapeur d'eau (B) au moyen d'une opération d'extrusion.

4. Procédé selon l'une quelconque des revendications 1 à 3, **caractérisé en ce que** l'on utilise comme bande porteuse (2) un film, un tissu textile ou un matériau non-tissé.

5. Procédé selon l'une quelconque des revendications 1 à 4, **caractérisé en ce que** l'on dépose le matériau perméable à la vapeur d'eau (B) sur la bande porteuse (2) au moyen d'une buse plate (7).

6. Procédé selon l'une quelconque des revendications 1 à 5, **caractérisé en ce que** l'on dépose l'adhésif (A) sur la bande porteuse (2) de telle manière qu'il existe sur la bande porteuse (2) une couche d'adhésif à pores ouverts sans revêtement de surface entièrement continu.

7. Procédé selon l'une quelconque des revendications 1 à 6, **caractérisé en ce que** l'on effectue le refroidissement selon l'étape d) de la revendication 1, par le fait que l'on refroidit le deuxième rouleau (5).

8. Dispositif pour la mise en oeuvre du procédé selon l'une quelconque des revendications 1 à 7, dans lequel le dispositif présente:
- un premier rouleau (3), dans lequel une buse (6) pour le dépôt d'adhésif fondu (A) sous la forme d'une colle fusible à l'état liquide fondu est disposée en un premier endroit de la périphérie du premier rouleau (3) ou dans la direction de transport (F) avant le premier point de contact entre le premier rouleau (3) et la bande porteuse (2),
- un deuxième rouleau (5), qui coopère avec le premier rouleau (2) en formant une emprise de rouleaux (4),
- une buse plate (7) pour le dépôt de matériau perméable à la vapeur d'eau (B), qui est disposée dans la région de l'emprise de rouleaux (4),
**caractérisé en ce que** la buse (6) est formée par une buse à fente large.

9. Dispositif selon la revendication 8, **caractérisé en ce que** le premier endroit de la périphérie du premier rouleau (3) et l'emprise de rouleaux (4) sont espacés l'un de l'autre d'un angle périphérique (α) d'au moins 120°, de préférence de 180°.
